# EUROPÄISCHE PATENTSCHRIFT

(11) **EP 3 263 348 B1**
(45) Veröffentlichungstag und Bekanntmachung des Hinweises auf die Patenterteilung: **30.01.2019**
(21) Anmeldenummer: 17165393.4
(22) Anmeldetag: 07.04.2017
(51) Int. Cl.: B41J 2/21, B41J 2/045, G06K 15/10

(54) **DRUCKDÜSENKOMPENSATION DURCH ABWEICHENDE DRUCKDÜSEN**
PRESSURE NOZZLE COMPENSATION BY MEANS OF DIVERGENT PRESSURE NOZZLES
COMPENSATION DE BUSE DE PRESSION PAR BUSES DE PRESSION DÉVIANTES

(30) Priorität: 28.06.2016 DE 102016211578
(43) Veröffentlichungstag der Anmeldung: 03.01.2018
(73) Patentinhaber: Heidelberger Druckmaschinen AG, 69115 Heidelberg (DE)
(72) Erfinder: Köhler, Hans, 68535 Edingen-Neckarhausen (DE); Tita, Ralf, 69434 Hirschhorn (DE)

(56) Entgegenhaltungen:
- WO-A1-2015/192055
- US-A1- 2004 252 148
- US-B1- 6 354 689
- US-B1- 9 365 033

## Beschreibung

Die Erfindung betrifft ein Verfahren zur Kompensation ausgefallener Druckdüsen in einer Inkjet-Druckmaschine, wobei abweichend druckende Druckdüsen unterstützend zur Kompensation eingesetzt werden.

Die Erfindung liegt in dem technischen Gebiet des Digitaldrucks.

Im Allgemeinen umfassen Inkjet-Druckmaschinen einen oder mehrere Druckköpfe und jeder Druckkopf umfasst eine Vielzahl von Druckdüsen. Die Inkjet-Druckmaschinen verwenden die Düsen zum Drucken, indem Tinte ausgestrahlt wird. Diese Druckmaschinen haben Düsenplatten mit spezifischen Anordnungen der Einzeldüsen. Bei Ausfall einer einzelnen Druckdüse entstehen Bereiche, die nicht durch die dafür vorgesehene Düse in dem Einzelfarbenauszug bebildert werden können. Es entstehen daher farbfreie Stellen, die sich als White Lines zeigen können. Handelt es sich um einen mehrfarbigen Druck, so fehlt die entsprechende Farbe an dieser Stelle und die Farbwerte werden verzerrt. Zu beachten ist auch, dass der Strahlverlauf einer Einzeldüse nicht ideal verläuft sondern davon mehr oder weniger abweichen kann, außerdem ist die Größe eines gejetteten Punktes zu berücksichtigen. Somit betrifft eine fehlfunktionierende Düse die Druckqualität jedes gedruckten Dokuments, sofern sie zum Druckergebnis beiträgt. Die Ursachen für den Ausfall von Einzeldüsen sind verschiedenartig, dabei kann es sich um einen temporären Ausfall oder um einen dauernden Ausfall handeln.

Um die Auswirkungen auf das Druckbild insbesondere in Vollflächen zu reduzieren, sind aus dem Stand der Technik mehrere Ansätze zur Kompensation bekannt.

Einer dieser Ansätze zur Kompensation ausgefallener Druckdüsen besteht darin, die ausgefallene Druckdüse durch die Druckdüsen von jeweils anderen benutzten Druckfarben an der gleichen Stelle zu ersetzen. Dabei wird versucht, durch gezielten und gesteuerten Übereinanderdruck der noch verfügbaren Druckdüsen der anderen benutzten Druckfarben die ausgefallene Druckfarbe möglichst genau zu ersetzen. Dieser Ansatz ist jedoch nur beim Mehrfarbendruck einsetzbar.

Ein weiterer Ansatz zur Kompensation ausgefallener Druckdüsen besteht darin, eine Redundanz von Druckdüsen derselben Farbe zu schaffen. Dies kann zum Beispiel durch mehrzeilige Druckköpfe realisiert werden, wo entsprechend mehrere Druckdüsen die gleiche Stelle im Druckbild abdecken können oder auch durch den Einsatz mehrerer Druckköpfe, welche dann so angeordnet sind, dass jede Stelle im bedruckten Drucksubstrat von mehreren Druckköpfen erfasst werden kann. Der Nachteil dieses Ansatzes ist allerdings ein erhöhter Konstruktionsaufwand sowie ein erhöhter Wartungs- und Betriebskostenaufwand, der sich aus dem für die Redundanz notwendigen erhöhten Hardware-Einsatz von mehreren Druckköpfen oder größeren mehrreihigen Druckköpfen ergibt.

Der gebräuchlichste Ansatz zur Kompensation ausgefallener Druckdüsen ist daher, die benachbarten Druckdüsen einer ausgefallenen Druckdüse so anzusteuern, dass sie mit einem erhöhten Tintentropfenvolumen die ausgefallene benachbarte Druckdüse kompensieren. Diese Ansteuerung ist ein komplexer Vorgang. So muss zum Beispiel berücksichtigt werden, dass es zu keiner Übersteuerung kommt, was andernfalls dazu führen würde, dass zwar die ausgefallene Druckdüse kompensiert wird, durch den dann zu großen Tinteneinsatz der benachbarten Druckdüsen jedoch anstatt der White Line der ausgefallenen Druckdüse eine Black Line durch den erhöhten Tinteneinsatz entsteht.

Die Patentanmeldung US 020060125850 A1 beschreibt ein Verfahren und eine Druckmaschine, welche nach diesem Prinzip arbeiten. Das Verfahren hat jedoch Auswirkungen auf das Druckbild - insbesondere wird es problematisch, wenn mehrere, direkt benachbarte Düsen ausfallen. Die Kompensation über den doppelten oder mehrfachen Abstand ist nur schlecht möglich. Dieses Verfahren zur Kompensation ausgefallener Druckdüsen mittels einer Erhöhung des Tintentropfenvolumens durch die benachbarten Druckdüsen funktioniert zwar sehr gut bei einzelnen ausgefallenen Druckdüsen, sobald jedoch die Lücken größer werden, also wenn zum Beispiel zwei oder noch mehr direkt benachbarte Druckdüsen ausfallen, stößt das Verfahren an seine Grenzen. Ein weiteres Problem, welches verschärfend hinzukommt, ist die Definition einer ausgefallenen Druckdüse. Häufig sind nicht sämtlich Druckdüsen, welche als ausgefallen markiert sind, wirklich vollständig ausgefallen, sondern haben lediglich eine verminderte Druckleistung oder drucken schräg abweichend von ihrem eigentlichen Zieldruckpunkt. Solche nur teilweise funktionsfähigen Druckdüsen werden im bisherigen Stand der Technik deaktiviert und wie fehlende ausgefallene Druckdüsen kompensiert. Diese teilweise ausgefallenen Druckdüsen machen einen erheblichen Teil der offiziell als defekt markierten Druckdüsen aus. Zudem kommt es sehr häufig vor, dass ausgefallene Druckdüsen gehäuft auftreten, das heißt direkt benachbart sind. Es wäre daher von Vorteil für einen sauberen und effizienten Druckvorgang, die Anzahl der ausgefallenen Druckdüsen zu reduzieren, indem man zumindest einen Teil der nur partiell ausgefallenen Druckdüsen nicht deaktivieren muss, sondern zum Drucken benutzen kann.

Die Aufgabe der vorliegenden Erfindung ist daher, ein Verfahren zur Kompensation ausgefallener Druckdüsen in einer Inkjet-Druckmaschine vorzustellen, welches die Anzahl ausgefallener Druckdüsen in der Inkjet-Druckmaschine reduziert und die Kompensation besonders benachbarter ausgefallener Druckdüsen gegenüber dem Stand der Technik verbessert.

Die erfindungsgemäße Aufgabe wird entsprechend gelöst durch ein Verfahren zur Kompensation ausgefallener Druckdüsen in einer Inkjet-Druckmaschine durch einen Rechner, wobei ausgefallene Druckdüsen durch ein vergrößertes Tintentropfenvolumen benachbarter Druckdüsen kompensiert werden und welches die folgenden Schritte umfasst:
1. Ausmessen aller vorhandenen Druckdüsen hinsichtlich sowohl eines Druckausfalls als auch einer Abweichung des Druckpunktes über einen bestimmten Schwellwert hinaus, wobei die Druckdüsen entsprechend entweder als funktionierend, ausgefallen oder abweichend druckend markiert werden und Abspeichern der Ergebnisse im Rechner.
2. Ausblenden aller funktionierenden Druckdüsen durch den Rechner.
3. Markieren aller übrigen alleinstehenden Druckdüsen als ausgefallene Druckdüsen durch den Rechner.
4. Gruppieren benachbarter übriger Druckdüsen durch den Rechner, wobei abweichend druckende Druckdüsen gemäß einer Bildungsvorschrift entweder als funktionierende und somit zur Kompensation beitragende Druckdüsen oder als ausgefallene Druckdüsen markiert werden.
5. Kompensieren aller als ausgefallen markierten Druckdüsen mittels des Rechners.

Im erfindungsgemäßen Verfahren werden die beiden Problempunkte des Ausfalls benachbarter Druckdüsen und von schief druckenden Druckdüsen so miteinander verkoppelt, dass das eine Symptom herangezogen wird, um das andere damit auszugleichen, wodurch im Endeffekt beide Probleme reduziert werden. Es wird also, nachdem alle ausgefallenen oder abweichenden Druckdüsen ermittelt wurden, analysiert, welche zum Beispiel der schief druckenden Druckdüsen nicht unbedingt deaktiviert werden müssen, wodurch eine weitere defekte Druckdüse entstehen würde, sondern, im Gegenteil, zur Kompensation einer wirklich ausgefallenen Druckdüse verwendet werden kann. Einzeln stehende schief druckende Druckdüsen lassen sich natürlich nicht zur Kompensation wirklich ausgefallener Druckdüsen verwenden und werden daher wie bisher auch im Stand der Technik deaktiviert und müssen weiterhin als ausgefallene Druckdüsen kompensiert werden. Sind jedoch mehrere ausgefallene und vor allem schief druckende Druckdüsen nebeneinander gelagert, was in der Praxis ohnehin recht häufig vorkommt, macht es absolut Sinn, die schief druckenden Druckdüsen eben nicht zu deaktivieren, um diese im Nachhinein dann ebenfalls noch kompensieren zu müssen, sondern sie im Gegenteil zur Kompensation einer benachbarten wirklich ausgefallenen Druckdüse zu verwenden. Haben wir zum Beispiel den Fall, dass rechts neben einer ausgefallenen Druckdüse eine schräg nach links druckende Druckdüse gelagert ist, so bietet es sich an, die ausgefallene Druckdüse sowohl durch die links benachbarte normal druckende Druckdüse als auch durch die schräg nach links in die Lücke der ausgefallenen Druckdüse hinein druckende Druckdüse zu kompensieren. Damit ist ein erheblich besseres Kompensationsergebnis möglich, als wenn die schräg nach links druckende Druckdüse deaktiviert werden würde und man über die benachbarten normal funktionierenden Druckdüsen eine Lücke von zwei ausgefallenen Druckdüsen zu kompensieren hat. Um zu wissen, wann ein solches Szenario eintritt und wann eine solche entsprechende Kompensation sinnvoll ist, muss dabei in regelmäßigen Abständen der Zustand der Druckdüsen ausgemessen werden. Welches Verfahren dafür eingesetzt wird, ist für das erfindungsgemäße Verfahren irrelevant. Es muss lediglich bekannt sein, welche Druckdüsen ausgefallen sind und welche Druckdüsen in welche Richtung und wie weit abweichend drucken. Diese Daten werden dann mit einer Bildungsvorschrift abgeglichen, wobei der Bildungsvorschrift sämtliche mögliche Szenarien von ausgefallenen und abweichend druckenden Druckdüsen zu entnehmen sein müssen. Durch diesen automatisierten Abgleich durch einen Rechner lässt sich dann mittels des Rechners problemlos feststellen, welche der schief spritzenden Druckdüsen zur Kompensation verwendet werden können und welche wie bisher im Stand der Technik deaktiviert werden und im Nachhinein ebenfalls kompensiert werden müssen.

Erfindungsgemäß ist dabei ebenfalls, dass die abweichend druckenden Druckdüsen jeweils quer zur Druckrichtung schief druckend sind und zur Kompensation quer zur Druckrichtung benachbarter, als ausgefallen markierter Druckdüsen verwendet werden. Für die abweichend druckenden Druckdüsen ergeben sich im Praxiseinsatz hauptsächlich zwei Szenarien. Die abweichende Druckdüse kann entweder nach links abweichend drucken oder nach rechts abweichend drucken. Die benachbarten Druckdüsen sind dabei üblicherweise quer zur Druckrichtung angeordnet. Dies bedeutet im Endeffekt, dass die Druckdüsen jeweils entweder links quer zur Druckrichtung oder rechts quer zur Druckrichtung abweichen können.

Vorteilhafte und daher bevorzugte Weiterbildungen dieser Erfindung ergeben sich aus den zugehörigen Unteransprüchen sowie aus der Beschreibung und den zugehörigen Zeichnungen.

Eine weitere bevorzugte Weiterbildung des erfindungsgemäßen Verfahrens ist dabei, dass die abweichend druckenden Druckdüsen jeweils längs zur Druckrichtung schief druckend sind und zur Kompensation längs zur Druckrichtung benachbarter, als ausgefallen markierter Druckdüsen verwendet werden. Obwohl die Hauptanwendung für das erfindungsgemäße Verfahren eindeutig links und rechts quer zur Druckrichtung abweichend druckende Druckdüsen sind, gibt es natürlich auch Druckdüsen, die jeweils längs zur Druckrichtung, das heißt nach oben oder nach unten abweichend drucken. Auch diese Druckdüsen lassen sich zur Kompensation ausgefallener Druckdüsen einsetzen, in dem Fall, wenn die ausgefallenen benachbarten Druckdüsen entsprechend längs zur Druckrichtung liegen. Da in der Praxis die Druckdüsen in Druckreihen im Inkjetdruckkopf angeordnet sind und diese Druckreihen üblicherweise quer zur Druckrichtung liegen, ist dieser Anwendungsfall eher selten und betrifft in der Hauptsache Druckköpfe mit mehreren Reihen von übereinander angeordneten Druckdüsen.

Eine weitere bevorzugte Weiterbildung des erfindungsgemäßen Verfahrens ist dabei, dass die benachbarten übrigen Druckdüsen durch eine im Rechner gespeicherte feste Tabelle als Bildungsvorschrift gruppiert werden. Als beste Art der Bildungsvorschrift hat sich dabei eine feste Tabelle erwiesen, welche sich zum Beispiel als im Rechner gespeicherte feste mehrstufige Logiktabelle anwenden lässt. Die Tabelle kann zur schnelleren Abarbeitung im Rechner auch in beliebigen anderen digitalen Formen vorliegen, zum Beispiel als Matrix.

Eine weitere bevorzugte Weiterbildung des erfindungsgemäßen Verfahrens ist dabei, dass die feste Tabelle als Bildungsvorschrift alle möglichen auftretenden Kombinationen bei Gruppen von sowohl zwei als auch drei jeweils quer und längs zur Druckrichtung schief druckenden ausgefallenen Druckdüsen enthält. Wie bereits erwähnt, müssen von der Bildungsvorschrift sämtliche möglichen auftretenden Kombinationen von ausgefallenen, links, rechts, oben, unten abweichend druckenden Druckdüsen erfasst sein. Da es extrem selten ist, dass mehr als drei Druckdüsen abweichend druckend oder ausgefallen sind, reicht es für fast alle Fälle aus, in der Bildungsvorschrift in Form der Tabelle alle auftretenden Kombinationen sowohl für zwei benachbarte, nicht korrekt druckende Druckdüsen, als auch für drei benachbart auftretende, nicht korrekt druckende Druckdüsen abzubilden.

Eine weitere bevorzugte Weiterbildung des erfindungsgemäßen Verfahrens ist dabei, dass bei auftretenden Gruppen von mehr als drei jeweils quer und längs zur Druckrichtung schief druckenden und ausgefallenen Druckdüsen, die Gruppen in kleinere Gruppen von jeweils zwei oder drei Druckdüsen aufgeteilt werden. Sollte also doch einmal eine Gruppe benachbarter, nicht korrekt druckender Druckdüsen auftreten, die mehr als drei Druckdüsen umfasst, so lässt sich diese Gruppe problemlos in kleinere Untergruppen von jeweils zwei oder drei nicht korrekt funktionierende Druckdüsen aufteilen und damit die bekannte feste Tabelle, welche die Kombination für zwei und drei benachbarte, nicht korrekt druckender Druckdüsen umfasst, für diese Untergruppen anwenden. So würden zum Beispiel aus einer Gruppe von vier benachbarten inkorrekt druckenden Druckdüsen zwei Untergruppen von jeweils zwei abweichenden Druckdüsen entstehen, aus einer Gruppe von fünf zwei Untergruppen mit jeweils zwei und drei Druckdüsen. Dieses Vorgehen hat den Vorteil, dass die feste Tabelle als Bildungsvorschrift entsprechend klein und damit leichter anzuwenden, zu aktualisieren und zu verwalten ist.

Eine weitere bevorzugte Weiterbildung des erfindungsgemäßen Verfahrens ist dabei, dass bei auftretenden Gruppen von mehr als drei, jeweils quer und längs zur Druckrichtung schief druckenden und ausgefallenen Druckdüsen neue feste Tabellen für alle möglichen auftretenden Kombinationen erstellt und eingesetzt werden. Ein alternatives Vorgehen besteht darin, auch für Gruppen von vier oder fünf oder sechs und noch mehr auftretenden, ausgefallenen oder abweichend druckenden Druckdüsen feste Tabellen zu erstellen, mit denen alle dann möglichen auftretenden Kombinationen abgedeckt sind. Dieses Vorgehen ist genauer als die Aufspaltung in kleinere Untergruppen, weil damit der Gesamtüberblick über diesen Block nicht korrekt druckender Druckdüsen erhalten bleibt, jedoch ist durch die hohe Anzahl von Kombinationen die feste Tabelle dann sehr groß und entsprechend schlechter zu verwalten.

Eine weitere bevorzugte Weiterbildung des erfindungsgemäßen Verfahrens ist dabei, dass die benachbarten übrigen Druckdüsen durch einen auf dem Rechner ausgeführten Algorithmus als Bildungsvorschrift kopiert werden. Alternativ zum Verwenden einer festen Tabelle als Bildungsvorschrift, mit welcher entschieden wird, ob abweichend druckende Druckdüsen zur Kompensation eingesetzt werden können, lässt sich auch ein Algorithmus einsetzen, welcher für auftretende Szenarien, das heißt Kombinationen von benachbarten ausgefallenen oder abweichend druckenden Druckdüsen einen entsprechenden Ausgang liefert, welche der abweichend druckenden Druckdüsen zum Kompensation verwendet werden können. Der Einsatz eines Algorithmus hat dabei gegenüber einer festen Tabelle den Vorteil, dass dieser sämtliche Szenarien mit einmal abdeckt, so zum Beispiel auch größere Gruppen benachbarter, nicht korrekt druckender Druckdüsen, während die Tabelle im Praxiseinsatz meist nicht sämtliche Szenarien abdeckt, sondern dann bei größeren Gruppen in kleinere Untergruppen aufgespalten wird. Die Tabelle hat dafür den Vorteil, dass sie effizient und vor allem übersichtlich ist; zudem ist sie nicht von einem mathematischen Algorithmus abhängig, sondern in sie können auch Erfahrungswerte eingetragen werden. Ergibt sich zum Beispiel aus der Erfahrung des praktischen Einsatzes, dass für eine bestimmte Kombination von ausgefallenen bzw. abweichend druckenden Druckdüsen es besonders effizient ist, bestimmte abweichende Druckdüsen zur Kompensation einzusetzen, so kann dies in der Tabelle eingetragen werden, während es sich nur sehr schwer in einem Algorithmus abbilden ließe.

Eine weitere bevorzugte Weiterbildung des erfindungsgemäßen Verfahrens ist dabei, dass durch das Ausmessen aller vorhandenen Druckdüsen ein Maß der numerisch ermittelten Schiefheit bestimmt wird, in die feste Tabelle oder den Algorithmus als Bildungsvorschrift einfließt und dieses Maß zur Entscheidung für die Gruppierung der benachbarten, übrigen Druckdüsen durch den Rechner beiträgt. Der Grad der Abweichung, bestimmt in Form eines numerischen Maßes, kann dabei nicht nur als Schwellwert benutzt werden, welcher bestimmt ob eine schief druckende Druckdüse als abweichend markiert wird, sondern auch als Richtwert zur Entscheidung beitragen, ob diese schief druckende Druckdüse überhaupt zur Kompensation benachbarter, ausgefallener Druckdüsen geeignet sind, oder doch eher selbst als ausgefallen markiert und kompensiert werden müssen. Eine Druckdüse, die nur wenig von ihrem Idealdruckpunkt abweicht ist natürlich wesentlich häufiger geeignet, weiterhin zur Kompensation beizutragen, als eine Druckdüse, welche um mehrere Druckdüsenabstände abweicht; auch wenn dies manchmal nützlich sein kann, wie z.B. für den Fall, dass sich an dieser Stelle zufällig eine ausgefallene Druckdüse befindet.

Eine weitere bevorzugte Weiterbildung des erfindungsgemäßen Verfahrens ist dabei, dass die Tröpfchengröße der Druckdüsen vom Rechner abhängig von einem Maß der numerisch ermittelten Schiefheit der Druckdüsen variiert wird. Die Größe der Tintentropfen, mit der eine abweichend druckende Druckdüse zur Kompensation beiträgt, soll dabei natürlich davon abhängig sein, um wieviel die Druckdüse von ihrem eigentlichen Druckpunkt abweicht. So sollte zum Beispiel eine nach links abweichend druckende Druckdüse, wenn sie zur Kompensation einer links benachbarten ausgefallenen Druckdüse verwendet wird, mit einem größeren Tintentropfenvolumen drucken, wenn sie genau den Druckpunkt der benachbarten ausgefallenen Druckdüse trifft, als wenn sie über diesen Druckpunkt hinausgeht und in den Druckbereich der links von der ausgefallenen Druckdüse benachbarten Druckdüse hineindruckt.

Die Erfindung als solche sowie konstruktiv und funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Figur 1:: eine schematische Ansicht einer Inkjet-Druckmaschine
- Figur 2:: eine Darstellung einer ausgefallenen Druckdüse mit erzeugter White Line
- Figur 3:: eine schematische Darstellung des Ablaufs des erfindungsgemäßen Verfahrens.

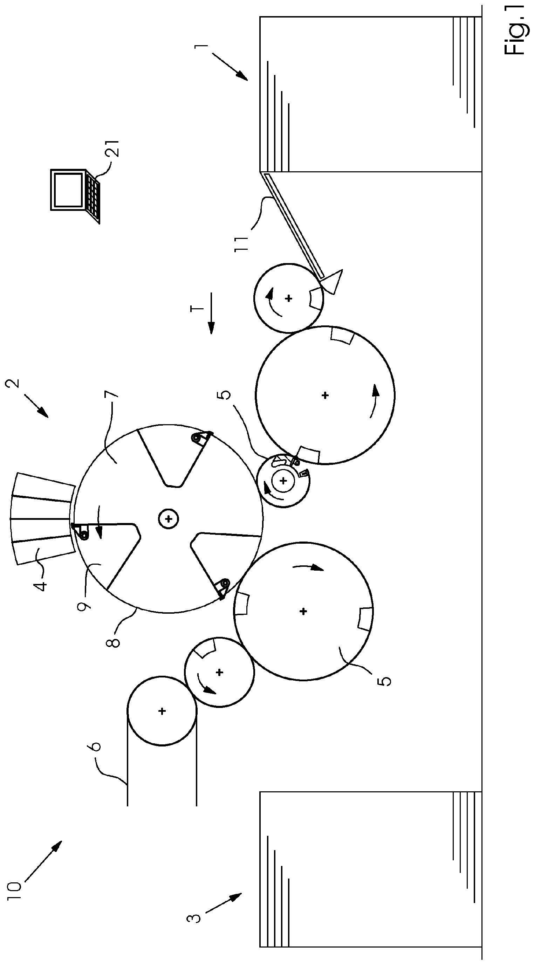

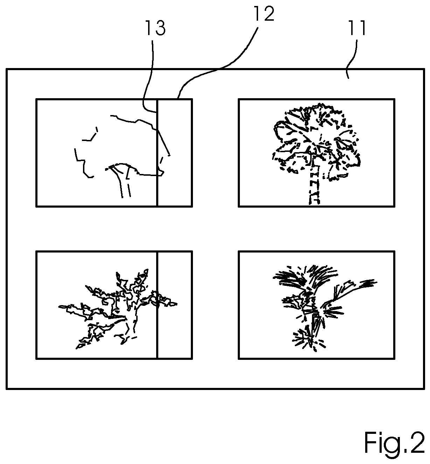

Das Anwendungsgebiet der bevorzugten Ausführungsvariante ist eine Inkjet-Druckmaschine 10. Ein Beispiel für den Aufbau einer solchen Maschine 10 ist in Figur 1 dargestellt. Beim Betrieb dieser Druckmaschine 10 kann es, wie bereits beschrieben, zu Ausfällen einzelner Druckdüsen in den Druckköpfen 4 im Druckwerk 2 kommen. Folge sind dann white lines 13, bzw. im Falle eines mehrfarbigen Drucks, verzerrte Farbwerte. Ein Beispiel einer solchen white line 13 in einem Druckbild 12 ist in Figur 2 dargestellt.

Der Druckvorgang wird von einem Steuerungsrechner 21 überwacht. Dabei wird der Bogen 11 vom Anleger 1 in Transportrichtung T über den Transferzylinder 5 zum Druckzylinder 7 und zu den Druckköpfen 4 transportiert, wobei die Druckköpfe 4 aus einer oder mehreren Reihen von Druckdüsen bestehen. Die Zylinder 5, 7 werden von einem oder mehreren Antrieben 6 angetrieben. Über die Druckdüsen in den Druckköpfen 4 wird dann die Farbe auf den Bogen 11 aufgebracht um das Druckbild 12 zu erzeugen. Der Bogen 11 wird weiter transportiert, getrocknet und über den Transferzylinder 5 zum Ausleger 3 weiter transportiert.

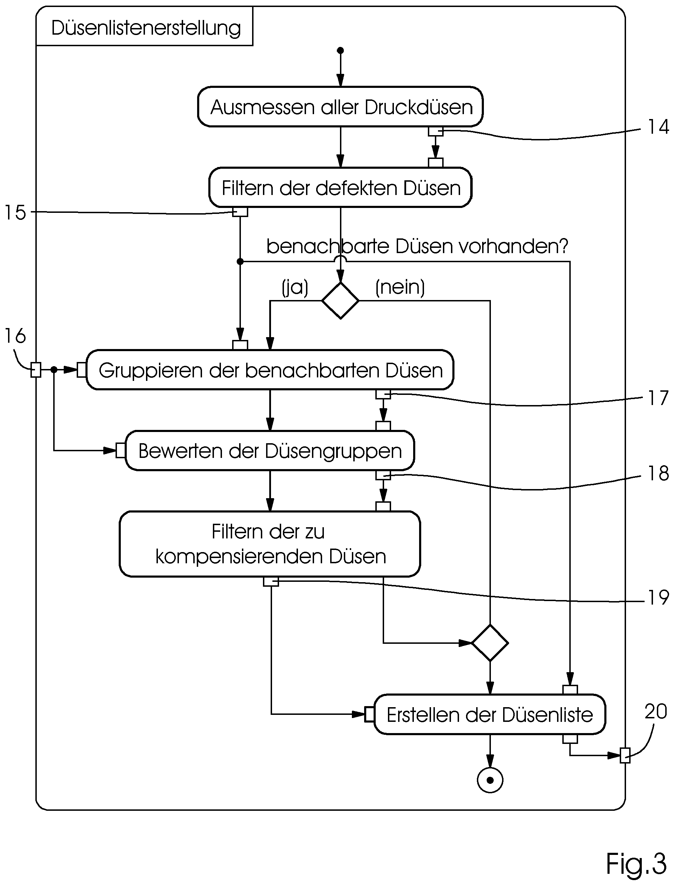

Der Ablauf des erfindungsgemäßen Verfahrens wird dabei in Figur 3 dargestellt. Im erfindungsgemäßen Verfahren wird dabei zwischen die klassischen Punkte der Detektion ausgefallener Druckdüsen und der Kompensation eine Düsenlisten-Erstellung eingeschoben. Zur Detektion der ausgefallenen Druckdüsen vermisst dabei ein Messsystem alle Düsen eines Druckkopfes 4. Aus dem Stand der Technik bekannte Messsysteme geben für jede Druckdüse die Abweichung in µm von der Idealposition an, sowie ein Maß für die Konsistenz einer erzeugten Drucklinie; weiterhin werden Druckdüsen mit Totalausfall markiert, falls sie unterhalb einer gewissen Schwelle der Wahrnehmbarkeit oder überhaupt nicht mehr drucken. Vorzugsweise benutzt die Erfindung dabei datenoptische Messsysteme. Die so ermittelte Düsenliste 14 wird dann an das erfindungsgemäße Verfahren zur Düsenlistenverarbeitung übergeben. Die Düsenlistenverarbeitung stellt dabei das erfindungsgemäße Verfahren dar. Nach der Düsenlistenverarbeitung wird die dann aktualisierte verbleibende Düsenliste 19 als Liste der zu kompensierenden Druckdüsen 20 zur Kompensation der entsprechenden ausgefallenen Druckdüsen verwendet. Das erfindungsgemäße Verfahren ist damit weitgehend unabhängig von der Art der Messwertaufnahme und der nachfolgenden Kompensationsmethode, wobei die Kompensationsmethode natürlich auf dem grundlegenden Prinzip der Kompensation durch benachbarte Druckdüsen basieren muss.

Im erfindungsgemäßen Verfahren, welches vollständig computergesteuert im Steuerungsrechner 21 durchgeführt wird, werden als erster Schritt sämtliche fehlerhaften Düsen aus der Liste aller ausgemessenen Druckdüsen 14 gefiltert. Das heißt, alle Düsen, die über einen gewissen Schwellwert hinaus erfasst werden, gelten als fehlerhaft, wobei fehlerhaft sowohl ausgefallen als auch abweichend druckend bedeuten kann. Alle funktionierenden Druckdüsen werden aus der Liste entfernt. Im nächsten Schritt wird für alle verbleibenden Druckdüsen in der Liste 15 überprüft, ob die jeweilige Düse noch direkte benachbarte Druckdüsen hat. Ist das nicht der Fall, so handelt es sich um eine einzelne bzw. einzeln stehende fehlerhafte Druckdüse, die in jedem Fall, egal ob ausgefallen oder abweichend druckend, kompensiert werden muss. In diesem Fall verbleibt sie in der Liste 15 und die nächste Druckdüse wird untersucht. Hat die Druckdüse dagegen direkte Nachbarn, dann handelt es sich um eine Gruppe von fehlerhaften Druckdüsen. Diese Gruppe wird dann entsprechend einer Bildungsvorschrift 16 in Form einer festen Tabelle gruppiert, so dass die Druckdüsenliste 17 neben den einzeln stehenden fehlerhaften Druckdüsen, auch gruppierte benachbarte fehlerhafte Druckdüsen umfasst. Die feste Tabelle 16 mit allen möglichen Kombinationen, die zwischen ausgefallenen Druckdüsen links und rechts abweichend druckender Druckdüsen auftreten kann, ist dabei im Folgenden aufgeführt.

### 2 fehlerhafte Druckdüsen - 1x fehlende und 1x schiefspritzende Düse

| Fall | Eingang | Ausgang |
|---|---|---|
| 1.1 | M→ | X→ |
| 1.2 | →M | →X |
| 1.3 | M← | X← |
| 1.4 | ←M | ←X |

### 2 fehlerhafte Druckdüsen - 2x schiefspritzende Düse

| Fall | Eingang | Ausgang |
|---|---|---|
| 2.1 | →→ | →X |
| 2.2 | →← | X← |
| 2.3 | ←→ | X→ |
| 2.4 | ←→ | X← |

### 3 fehlerhafte Druckdüsen

| Fall | Eingang | Ausgang |
|---|---|---|
| 3.1 | →→→ | →→X |
| 3.2 | →→← | →X← |
| 3.3 | →←→ | X←→ |
| 3.4 | →←← | ←X← |
| 3.5 | ←→→ | ←→X |
| 3.6 | ←→← | ←→X |
| 3.7 | ←←→ | X←→ |
| 3.8 | ←←← | X←← |
| 3.9 | M→→ | X→X |
| 3.10 | M→← | X→X |
| 3.11 | M←→ | X←X |
| 3.12 | M←← | X←X |
| 3.14 | →M→ | →X→ |
| 3.15 | →M← | →X← |
| 3.16 | ←M→ | ←X→ |
| 3.17 | ←M← | ←X← |
| 3.18 | →→M | X→X |
| 3.19 | →←M | X←X |
| 3.20 | ←→M | X→X |
| 3.21 | ←←M | X←X |
| 3.22 | MM→ | XX→ |
| 3.23 | MM← | XX← |
| 3.24 | M→M | X→X |
| 3.25 | M←M | X←X |
| 3.26 | →MM | →XX |
| 3.27 | ←MM | ←XX |

| | | |
|---|---|---|
| Legende: M - Missing; → - Düse spritzt nach rechts; ← - Düse spritzt nach links; X - Düse wird kompensiert | | |

Die Tabelle 16 umfasst dabei sowohl die Fälle, dass zwei fehlerhafte Druckdüsen nebeneinander angeordnet sind, als auch den Fall, dass drei fehlerhafte Druckdüsen vorhanden sind. Für jede mögliche Kombination als Eingangswert wird dann eine entsprechende Kompensationsvorschrift als Ausgang vorgeschlagen. Der Ausgangswert umfasst dabei als mögliche Werte für die einzelnen Druckdüsen die Möglichkeit, dass die Druckdüse kompensiert werden muss, oder aber dass sie links oder rechts druckend zur Kompensation verwendet wird. Umfasst eine Gruppe fehlerhafter Druckdüsen mehr als drei fehlerhafte Druckdüsen, so wird die Gruppe in kleinere Untergruppen von jeweils zwei oder drei fehlerhaften Druckdüsen aufgespalten und dann entsprechend rekursiv abgearbeitet. Für den Fall, dass die Gruppe nur aus ausgefallenen Druckdüsen und nicht links oder rechts spritzenden Druckdüsen besteht, so ist natürlich keine Bildungsvorschrift notwendig, sondern dann werden alle ausgefallenen Druckdüsen wie bisher im Stand der Technik kompensiert. Nach diesem Verfahrensschritt umfasst die Druckdüsenliste 18 nun gruppierte, benachbarte Druckdüsen, wobei die Druckdüsen entsprechend des Ausgangswertes der festen Tabelle 16 als zu kompensierend oder funktionierend markiert sind.

Wurde die Gruppierung entsprechend der Bildungsvorschrift durchgeführt, so werden nun die Druckdüsen, die nicht als zu kompensierend markiert wurden, d.h. funktionierende Druckdüsen sind, entfernt. Die Druckdüsenliste 19 enthält nun also nur noch zu fehlerhafte und kompensierende Druckdüsen und zwar sowohl die verbleibenden einzeln stehenden, als auch die gruppierten Druckdüsen. Diese resultierende, reduzierte Druckdüsenliste 20 wird nun zur Kompensation verwendet. Da sie wesentlich weniger zu kompensierende Druckdüsen enthält als ohne das erfindungsgemäße Verfahren und das zudem noch in den besonders heiklen Bereichen von mehreren nebeneinander liegenden fehlerhaften Druckdüsen, wird damit eine wesentlich effizientere Kompensation als bei den bisherigen, aus dem Stand der Technik bekannten, Verfahren erreicht.

### Bezugszeichenliste

- T: Transportrichtung
- 1: Anleger
- 2: Druckwerk
- 3: Ausleger
- 4: Inkjetköpfe
- 5: Transferzylinder
- 6: Antrieb
- 7: Druckzylinder (Jettingzylinder)
- 8: Bogenhaltebereich
- 9: Kanal
- 10: Bogendruckmaschine
- 11: Bogen
- 12: Druckbild
- 13: White Line
- 14: ausgemessene, vollständige Druckdüsenliste
- 15: Druckdüsenliste mit fehlerhaften Druckdüsen
- 16: Bildungsvorschrift - feste Tabelle
- 17: Druckdüsenliste mit gruppierten, benachbarten Druckdüsen
- 18: Druckdüsenliste mit markierten, benachbarten Druckdüsen
- 19: Druckdüsenliste mit gefilterten, kompensierenden Druckdüsen
- 20: fertige Druckdüsenliste zur Kompensation
- 21: Steuerungsrechner

## Patentansprüche

1. Verfahren zur Kompensation ausgefallener Druckdüsen in einer Inkjet-Druckmaschine durch einen Rechner, wobei ausgefallene Druckdüsen durch ein vergrößertes Tintentropfenvolumen benachbarter Druckdüsen kompensiert werden, die folgenden Schritte umfassend:
• Ausmessen aller vorhandenen Druckdüsen hinsichtlich sowohl eines Druckausfalls als auch einer Abweichung des Druckpunktes über einen bestimmten Schwellwert hinaus, wobei die Druckdüsen entsprechend entweder als funktionierend, ausgefallen oder quer zur Druckrichtung abweichend vom Druckpunkt druckend markiert werden und abspeichern der Ergebnisse im Rechner
• Ausblenden aller funktionierenden Druckdüsen durch den Rechner
• Markieren aller übrigen alleinstehenden Druckdüsen als ausgefallene Druckdüsen durch den Rechner
• Gruppieren benachbarter übriger Druckdüsen durch den Rechner, wobei quer zur Druckrichtung abweichend vom Druckpunkt druckende Druckdüsen gemäß einer Bildungsvorschrift entweder als funktionierende und somit zur Kompensation beitragende Druckdüsen oder als ausgefallene Druckdüsen markiert werden
• Kompensieren aller als ausgefallen markierten Druckdüsen mittels des Rechners

2. Verfahren nach Anspruch 1,
**dadurch gekennzeichnet,**
**dass** auch abweichend vom Druckpunkt druckende Druckdüsen, welche jeweils längs zur Druckrichtung schief druckend sind, zur Kompensation längs zur Druckrichtung benachbarter, als ausgefallen markierter Druckdüsen verwendet werden.

3. Verfahren nach einem der vorherigen Ansprüche,
**dadurch gekennzeichnet,**
**dass** die benachbarten, übrigen Druckdüsen durch eine im Rechner gespeicherte feste Tabelle als Bildungsvorschrift gruppiert werden.

4. Verfahren nach Anspruch 3,
**dadurch gekennzeichnet,**
**dass** die feste Tabelle als Bildungsvorschrift alle möglichen auftretenden Kombinationen bei Gruppen von sowohl zwei als auch drei, jeweils quer und längs zur Druckrichtung, schief druckenden und ausgefallenen Druckdüsen enthält.

5. Verfahren nach Anspruch 4,
**dadurch gekennzeichnet,**
**dass** bei auftretenden Gruppen von mehr als drei jeweils quer und längs zur Druckrichtung schief druckenden und ausgefallenen Druckdüsen, die Gruppen in kleinere Gruppen von jeweils zwei oder drei Druckdüsen aufgeteilt werden.

6. Verfahren nach Anspruch 4,
**dadurch gekennzeichnet,**
**dass** bei auftretenden Gruppen von mehr als drei jeweils quer und längs zur Druckrichtung schief druckenden und ausgefallenen Druckdüsen neue feste Tabellen für alle möglichen auftretenden Kombinationen erstellt und eingesetzt werden.

7. Verfahren nach einem der Ansprüche 1 bis 2,
**dadurch gekennzeichnet;**
**dass** die benachbarten, übrigen Druckdüsen durch einen auf dem Rechner ausgeführten Algorithmus als Bildungsvorschrift gruppiert werden.

8. Verfahren nach einem der vorherigen Ansprüche 3 bis 7,
**dadurch gekennzeichnet;**
**dass** durch das Ausmessen aller vorhandenen Druckdüsen ein Maß der numerisch ermittelten Schiefheit bestimmt wird, in die feste Tabelle oder den Algorithmus als Bildungsvorschrift einfließt und dieses Maß zur Entscheidung für die Gruppierung der benachbarten, übrigen Druckdüsen durch den Rechner beiträgt.

9. Verfahren nach einem der vorherigen Ansprüche,
**dadurch gekennzeichnet;**
**dass** die Tröpfchengröße der Druckdüsen vom Rechner abhängig von einem Maß der numerisch ermittelten Schiefheit der Druckdüsen variiert wird.

## Claims

1. Method for compensating for failed printing nozzles in an inkjet printing machine by means of a computer, wherein failed printing nozzles are compensated for by an increased ink drop volume of adjacent printing nozzles, the method comprising the following steps of
• measuring all printing nozzles that are present both in terms of a failure to print and in terms of a deviation of the printed dot beyond a specified threshold to mark the printing nozzles accordingly as functioning, failed, or printing a dot that deviates transversely to the printing direction, and saving the results on the computer,
• removing all functioning printing nozzles by means of the computer,
• marking all remaining printing nozzles that stand alone as failed printing nozzles by means of the computer,
• grouping all neighboring remaining printing nozzles by means of the computer, wherein printing nozzles that print a dot that deviates from the actual dot in a transverse direction are marked either as functioning printing nozzles contributing to the compensation or as failed printing nozzles in accordance with a rule,
• compensating for all printing nozzles that have been marked as failed printing nozzles by means of the computer.

2. Method according to claim 1,
**characterized in**
**that** printing nozzles printing a dot that deviates from the print dot in a longitudinal direction with respect to the printing direction are used to compensate for printing nozzles that are adjacent in a longitudinal direction and have been marked as failed printing nozzles.

3. Method according to any one of the preceding claims,
**characterized in**
**that** the adjacent remaining printing nozzles are grouped in accordance with a fixed table that is saved on the computer and acts as the rule.

4. Method according to claim 3,
**characterized in**
**that** as the rule, the fixed table includes all combinations that may possibly occur for groups of two and three printing nozzles that print at an angle in the transverse and longitudinal directions relative to the printing direction.

5. Method according to claim 4,
**characterized in**
**that** when groups occur of more than three printing nozzles that print at an angle in the transverse and longitudinal directions relative to the printing direction or have failed, the groups are subdivided into smaller groups of two or three printing nozzles each.

6. Method according to claim 4,
**characterized in**
**that** when groups of more than three printing nozzles that print at an angle in the transverse and longitudinal directions relative to the printing direction or have failed, new fixed tables for all combinations that may possibly occur are created and applied.

7. Method according to any one of claims 1 to 2,
**characterized in**
**that** the adjacent remaining printing nozzles are grouped by an algorithm running on the computer as the rule.

8. Method according to any one of the previous claims 3 to 7,
**characterized in**
**that** by measuring all printing nozzles that are present, a measure of a numerically established angularity is determined, entered into the fixed table or algorithm as the rule, and that this measure contributes to the decision on the grouping of the adjacent remaining printing nozzles by means of the computer.

9. Method according to any one of the preceding claims,
**characterized in**
**that** the drop size of the printing nozzles is varied by the computer as a function of a measure of the numerically established angularity of the printing nozzles.

## Revendications

1. Procédé de compensation de la défaillance de buses d'impression dans une machine à imprimer à jet d'encre par un ordinateur, pour lequel les buses d'impression défaillantes sont compensées par un volume de gouttes d'encre accru de buses d'impression voisines, composé des étapes suivantes :
• Mesure de toutes les buses d'impression existantes dans l'éventualité d'une défaillance de l'impression comme d'un écart de la valeur du point d'impression dépassant une valeur seuil définie, pour lequel les buses d'impression sont repérées comme fonctionnant, défaillantes ou effectuant une impression s'écartant transversalement du point d'impression, et enregistrement des résultats dans l'ordinateur
• Masquage par l'ordinateur de toutes les buses d'impression fonctionnant
• Repérage par l'ordinateur de toutes les autres buses d'impression individuelles comme buses d'impression défaillantes
• Groupage des buses d'impression voisines restantes par l'ordinateur, les buses effectuant une impression s'écartant transversalement par rapport au sens d'impression du point d'impression étant repérées soit comme buses d'impression fonctionnant et donc contribuant à la compensation, soit comme buses d'impression défaillantes
• Compensation de toutes les buses d'impression repérées comme étant défaillantes à l'aide de l'ordinateur

2. Procédé selon la revendication 1,
**caractérisé par le fait**
**que** les buses d'impression dont l'impression s'écarte du point d'impression, effectuant une impression de biais dans le sens longitudinal par rapport au sens d'impression, sont utilisées pour la compensation longitudinale par rapport au sens d'impression de buses d'impression voisines, repérées comme étant défaillantes.

3. Procédé selon l'une des revendications précédentes,
**caractérisé par le fait**
**que** les buses d'impression voisines restantes sont groupées comme règle de formation via un tableau fixe enregistré dans l'ordinateur.

4. Procédé selon la revendication 3,
**caractérisé par le fait**
**que** le tableau fixe servant de règle de formation renferme toutes les occurrences de combinaisons possibles, pour des groupes de deux ou de trois buses d'impression imprimant de biais, transversalement et longitudinalement par rapport au sens d'impression, et défaillantes.

5. Procédé selon la revendication 4,
**caractérisé par le fait**
**que** dans le cas d'occurrence de groupes de plus de trois buses d'impression imprimant de biais, transversalement et longitudinalement par rapport au sens d'impression, et défaillantes, les groupes sont subdivisés en plus petits groupes de deux ou trois buses d'impression.

6. Procédé selon la revendication 4,
**caractérisé par le fait**
**que**, dans le cas d'occurrence de groupes de plus de trois buses d'impression imprimant de biais, transversalement et longitudinalement par rapport au sens d'impression, et défaillantes, de nouveaux tableaux fixes sont créés et utilisés pour toutes les occurrences de combinaisons possibles.

7. Procédé selon l'une des revendications 1 à 2,
**caractérisé par le fait**
**que** les buses restantes voisines sont groupées comme règle de formation via un algorithme exécuté par l'ordinateur.

8. Procédé selon l'une des revendications précédentes 3 à 7,
**caractérisé par le fait**
**qu'**une mesure de la déviation calculée numériquement via la mesure de toutes les buses d'impression est déterminée, et intégrée dans le tableau fixe ou l'algorithme comme règle de formation, et que cette mesure contribue à la décision de groupage des buses restantes voisines par l'ordinateur.

9. Procédé selon l'une des revendications précédentes,
**caractérisé par le fait**
**que** l'ordinateur fait varier la taille des gouttelettes des buses d'impression en fonction d'une mesure de la déviation des buses d'impression déterminée numériquement.
